# EUROPÄISCHE PATENTSCHRIFT

(11) **EP 3 028 964 B1**
(45) Veröffentlichungstag und Bekanntmachung des Hinweises auf die Patenterteilung: **10.01.2018**
(21) Anmeldenummer: 15194219.0
(22) Anmeldetag: 12.11.2015
(51) Int. Cl.: B65G 47/66, B65G 13/06

(54) **ROLLENMODUL MIT FÖRDERROLLEN UND MITNAHMEROLLEN**
ROLLER MODULE WITH CONVEYOR ROLLERS AND SLAVE ROLLERS
MODULE A ROULEAUX COMPRENANT DES ROULEAUX DE TRANSPORT ET DES ROULEAUX D'ENTRAINEMENT

(30) Priorität: 01.12.2014 DE 102014224506
(43) Veröffentlichungstag der Anmeldung: 08.06.2016
(73) Patentinhaber: ROBERT BOSCH GMBH, 70442 Stuttgart (DE)
(72) Erfinder: Ludwig, Peter, 72072 Tuebingen (DE); Buttau, Hans-Peter, 74348 Lauffen (DE)
(74) Vertreter: Maiß, Harald

(56) Entgegenhaltungen:
- DE-U1-202006 007 529
- JP-A- S50 138 583
- JP-A- 2005 280 869
- JP-A- 2008 110 857
- JP-A- 2009 107 764
- JP-U- S57 138 829
- JP-U- S58 161 916
- US-A- 2 624 444
- US-A1- 2008 142 341

## Beschreibung

Die Erfindung betrifft eine Fördervorrichtung mit einem Rollenmodul gemäß dem Oberbegriff von Anspruch 1. Aus dem Katalog, der am 14.10.2014 unter der Internetadresse http://www.flexlink.com/de/Images/TB5612EN_9_JE.pdf abrufbar war, ist ein Rollenmodul bekannt, welches zur Verwendung mit einem Kettenförderer vorgesehen ist. Ein derartiges Rollenmodul, das auch als Röllchenbrücke bezeichnet wird, wird im sogenannten Fördergraben zwischen zwei in Förderrichtung unmittelbar benachbarten Kettenförderern angeordnet. Dadurch kann das auf den Kettenförderern geförderte Fördergut beim Übergang zwischen den zwei Kettenförderern nicht in den Fördergraben fallen, welcher aufgrund der Umlenkung der Förderkette entsteht.

Das oben angesprochene Rollenmodul weist eine Förderrichtung und eine Querrichtung auf, welche senkrecht zueinander ausgerichtet sind. Es sind wenigstens zwei drehbare Förderrollen vorgesehen, die jeweils wenigstens eine Förderumfangsfläche aufweisen. Die Drehachsen der Förderrollen sind parallel zur Querrichtung angeordnet, wobei die Förderrollen in Förderrichtung nacheinander angeordnet sind. Die Förderumfangsflächen definieren eine Förderebene, wobei das Fördergut auf der Förderebene entlang läuft.

Aus der JP S50 138583 A ist eine Fördervorrichtung mit den Merkmalen des Oberbegriffs des Anspruchs 1 bekannt.

Die Aufgabe der Erfindung besteht darin, das Fördergut möglichst störungsfrei über den Fördergraben zwischen zwei aneinandergrenzenden Kettenförderern zu bewegen, insbesondere, wenn das Fördergut klein im Vergleich zu den Abmessungen des Fördergrabens ist. Hierfür sollen die Förderrollen im Wesentlichen gleich schnell laufen, wobei insbesondere die Umfangsgeschwindigkeit der Förderumfangsflächen im Wesentlichen gleich sein soll. Darüber hinaus sollen die Förderrollen durch einen zugeordneten Kettenförderer antreibbar sein. Weiter soll das Rollenmodul auf einfache Weise hinsichtlich der Breite variierbar sein, um unterschiedliche Baugrößen zu realisieren. Die unterschiedlichen Baugrößen sollen dabei möglichst viele gleiche Teile aufweisen. Außerdem soll der Antrieb von unterschiedlichen Stellen an den beiden angrenzenden Kettenförderern her möglich sein.

Gemäß dem selbständigen Anspruch wird vorgeschlagen, dass wenigstens eine drehbare Mitnahmerolle vorgesehen ist, deren Drehachse parallel zur Querrichtung angeordnet ist, wobei die wenigstens eine Mitnahmerolle auf der von der Förderebene abgewandten Seite der wenigstens zwei Förderrollen angeordnet ist, wobei eine Umfangsfläche der wenigstens einen Mitnahmerolle in Drehmitnahmeeingriff mit den Förderumfangsflächen zweier zugeordneter Förderrollen steht. Die Mitnahmerolle bewirkt, dass die beiden zugeordneten Förderrollen im Wesentlichen gleich schnell laufen.
Bei einer erfindungsgemäßen Fördervorrichtung sind zwei Kettenförderer vorgesehen, welche jeweils ein drehbares Umlenkrad aufweisen, wobei ein einziges Zahnriemenrad vorgesehen ist, welches mit beiden genannten Umlenkrädern in formschlüssige Drehmitnahmeverbindung bringbar ist, wobei es mit einem der beiden genannten Umlenkrädern in formschlüssiger Drehmitnahmeverbindung steht, wobei ein Zahnriemen vorgesehen ist, welcher das Zahnriemenrad und eine Mitnahmerolle umschlingt.

Es ist erfindungsgemäß vorgesehen, dass zwei Mitnahmerollen jeweils mit einem Zahnriemenritzel versehen sind, wobei eines der beiden genannten Zahnriemenritzel von dem Zahnriemen umschlungen ist.

Es ist denkbar, dass die Förderrollen von wenigstens einem endlosen Zugmittel umschlungen werden, wobei die wenigstens eine Mitnahmerolle mittelbar über das wenigstens eine Zugmittel in Drehmitnahmeeingriff mit den Förderrollen steht. Vorzugsweise erfolgt der Drehmitnahmeeingriff aber unmittelbar zwischen den Förderrollen und der wenigstens einen Mitnahmerolle. Bei dem endlosen Zugmittel kann es sich um ein Förderband oder einen Förderriemen handeln.

In den abhängigen Ansprüchen sind vorteilhafte Weiterbildungen und Verbesserungen der Erfindung angegeben.

Es kann vorgesehen sein, dass die Anzahl der Mitnahmerollen um Eins kleiner als die Anzahl der Förderrollen ist, wobei alle Mitnahmerollen mit unterschiedlichen Paaren von Förderrollen in Drehmitnahmeeingriff stehen. Damit laufen alle Förderrollen gleich schnell. Vorzugsweise sind mehr als zwei Förderrollen vorhanden, damit ein langer Fördergraben überbrückt werden kann.

Es kann vorgesehen sein, dass der Drehmitnahmeeingriff zwischen der wenigstens einen Mitnahmerolle und den zwei zugeordneten Förderrollen reibschlüssig erfolgt. Hierdurch können die Förder- und die Mitnahmerollen besonders einfach und kostengünstig ausgeführt werden. Darüber hinaus wird ein Schlupf zwischen den Förder- und den Mitnahmerollen ermöglicht, so dass unterschiedliche Förderrollen mit leicht unterschiedlichen Umfangsgeschwindigkeiten laufen können. Es ist auch denkbar, dass der vorstehende Drehmitnahmeeingriff formschlüssig erfolgt. Dieser Formschluss wird vorzugsweise so ausgebildet, dass die genannten Rollen bei einer Blockade trotzdem weiterlaufen, beispielsweise durch Überspringen von Zähnen in einer Verzahnung. Diese Ausführung ist aber aufwändiger.

Es kann vorgesehen sein, dass wenigstens eine Förderrolle und/oder wenigstens eine Mitnahmerolle über ein zugeordnetes Antriebsmittel in Drehantriebsverbindung mit dem Kettenförderer bringbar sind. Vorzugsweise ist ausschließlich wenigstens einer Förderrolle ein Antriebsmittel zugeordnet. Bei dem Antriebsmittel handelt es sich vorzugsweise um ein Zugmittelgetriebe, höchst vorzugsweise um ein Zahnriemengetriebe. Damit ist sichergestellt, dass das Fördergut auch dann weiterbewegt wird, wenn es allein durch das Rollenmodul abgestützt wird, wobei es nicht mehr in unmittelbarem Antriebseingriff mit dem Kettenförderer steht.

Es kann vorgesehen sein, dass die Antriebsmittel so ausgebildet sind, dass sie wahlweise mit einem von zwei angrenzenden Kettenförderern in Drehantriebsverbindung bringbar sind. Damit kann für unterschiedliche Einbaufälle ein und dasselbe Rollenmodul verwendet werden. Die entsprechenden Einzelteile können damit in hoher Stückzahl kostengünstig hergestellt werden.

Es kann vorgesehen sein, dass die wenigstens eine Mitnahmerolle in Querrichtung kürzer als die beiden zugeordneten Förderrollen ist. Damit kann ein und dieselbe Mitnahmerolle für unterschiedlich breite Förderrollen verwendet werden. Die Mitnahmerolle kann damit in hoher Stückzahl kostengünstig hergestellt werden. Vorzugsweise ist die wenigstens eine Mitnahmerolle in Querrichtung mittig zu den beiden zugeordneten Förderrollen angeordnet, damit die Antriebskräfte symmetrisch in die Förderrolle eingeleitet werden. Damit kann der reibschlüssige Drehmitnahmeeingriff besonders hohe Kräfte übertragen. Es ist aber ebenso denkbar, die Mitnahmerollen in Querrichtung außermittig anzuordnen.

Es kann vorgesehen sein, dass der wenigstens einen Mitnahmerolle wenigstens eine gesonderte, vorgespannte Feder zugeordnet ist, welche die genannte Mitnahmerolle gegen die beiden zugeordneten Förderrollen drückt. Durch Veränderung der Vorspannkraft der genannten Feder kann eingestellt werden, welche Drehmomente maximal zwischen den Förderrollen übertragen werden können.

Es kann vorgesehen sein, dass eine Hochrichtung senkrecht zur Förderrichtung und zur Querrichtung angeordnet ist, wobei die wenigstens eine Mitnahmerolle an ihren beiden gegenüberliegenden Enden jeweils einen Lagerzapfen aufweist, der konzentrisch zu ihrer Drehachse angeordnet ist, wobei die Lagerzapfen in Hochrichtung beweglich gelagert sind, wobei jedem Lagerzapfen eine gesonderte vorgespannte Feder zugeordnet ist, welche den Lagerzapfen in Hochrichtung belastet. Hierdurch ergibt sich eine besonders kostengünstige Drehlagerung der Mitnahmerollen. Vorzugsweise sind die Lagerzapfen und die Federn in einer zugeordneten Führungsnut aufgenommen, welche in Hochrichtung verläuft. Alle Führungsnuten sind vorzugsweise in zwei gesonderten Rollenhaltern angeordnet. Bei den Federn handelt es sich vorzugsweise um Schraubenfedern.

Es kann vorgesehen sein, dass jede Förderrolle mehrere gesonderte Förderumfangsflächen aufweist, welche in Querrichtung beabstandet sind, wobei zwei unmittelbar benachbarte Förderrollen kammartig ineinander greifen. Hierdurch kann Fördergut mit besonders kleinen Außenabmessungen auf dem Rollenmodul gefördert werden.

Es kann vorgesehen sein, dass eine erste und eine zweite Seitenplatte vorgesehen ist, an denen die wenigstens zwei Förderrollen drehbar gelagert sind, wobei der ersten Seitenplatte ein Befestigungsabschnitt zugeordnet ist, welcher in Förderrichtung über die zweite Seitenplatte übersteht, wobei der Befestigungsabschnitt an dem Kettenförderer befestigbar ist. Hierdurch kann das Rollenmodul auf besonders einfache und kostengünstige Weise am Kettenförderer befestigt werden. Weiter kann die Drehantriebsverbindung zwischen dem Kettenförderer und den Förderrollen auf besonders einfache Weise hergestellt werden.

Es kann vorgesehen sein, dass die Förderumfangsflächen der wenigstens zwei Förderrollen kreiszylindrisch bezüglich der zugeordneten Drehachse ausgebildet sind, wobei die Umfangsfläche der wenigstens einen Mitnahmerolle kreiszylindrisch bezüglich der zugeordneten Drehachse ausgebildet ist. Hierdurch kann ein reibschlüssiger Drehmitnahmeeingriff auf besonders einfache und kostengünstige Weise erreicht werden.

Es kann vorgesehen sein, dass das Zahnriemenrad jeweils von zwei gegenüberliegenden Seiten her mit den beiden genannten Umlenkrädern in formschlüssige Drehmitnahmeverbindung bringbar ist.

Es kann vorgesehen sein, dass das Rollenmodul in zwei Stellungen an den beiden Kettenförderern montierbar ist, welche um 180° gedreht zueinander angeordnet sind.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine perspektivische Ansicht eines erfindungsgemäßen Rollenmoduls, welches zwischen zwei Kettenförderern eingebaut ist;
- Fig. 2: eine Explosionsansicht des Rollenmoduls nach Fig. 1;
- Fig. 3: einen vergrößerten Ausschnitt von Fig. 2 im Bereich der Mitnahmerollen;
- Fig. 4: einen Längsschnitt des Rollenmoduls nach Fig. 1; und
- Fig. 5: eine perspektivische Ansicht des Rollenmoduls nach Fig. 1 von schräg unten.

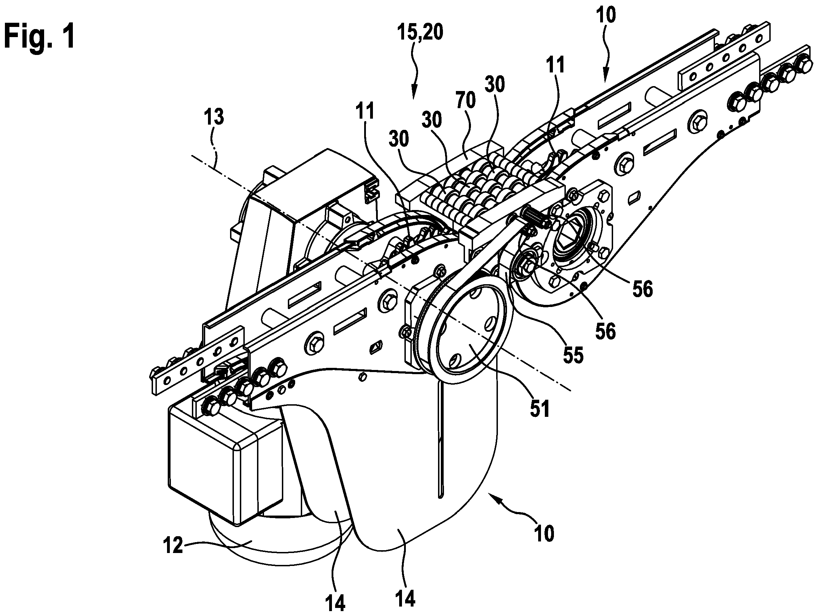

Fig. 1 zeigt eine perspektivische Ansicht einer Fördervorrichtung mit einem erfindungsgemäßen Rollenmodul 20, welches zwischen zwei Kettenförderern 10 eingebaut ist. Von den beiden Kettenförderern 10 ist jeweils nur die Umlenkbaugruppe dargestellt, welche Gegenstand der deutschen Patentanmeldung mit dem Aktenzeichen 102013215751.7 ist. Eine entsprechende Förderkette ist in der DE 10 2011 112 396 A1 gezeigt.

Die beiden Kettenförderer 10 umfassen jeweils ein Umlenkrad 11, welches bezüglich einer Drehachse 13 drehbar ist. Die (nicht dargestellte) Förderkette wird um das Umlenkrad 11 geführt, wobei sie in formschlüssigem Mitnahmeeingriff mit dem Umlenkrad 11 steht. Das Umlenkrad 11 kann unmittelbar von einem Antriebsmotor 12 in Drehbewegung versetzt werden. Es ist aber ebenso möglich, dass das Umlenkrad 11 von der Förderkette in Drehbewegung versetzt wird, wobei die Förderkette an anderer Stelle angetrieben wird. Im Bereich des Antriebsmotors 12 bildet sich typischerweise ein sogenannter Kettensack aus, welcher durch die beiden Abdeckplatten 14 abgedeckt wird. Der Antriebsmotor 12 ist vorzugsweise mit einem Getriebe versehen, mit dem die vergleichsweise hohe Motordrehzahl an die vergleichsweise langsame Bewegung der Förderkette angepasst wird.

Würde man in Fig. 1 das Rollenmodul 20 weglassen, so würde das Fördergut zwischen den beiden Kettenförderern 10 in einen sogenannten Fördergraben 15 fallen. Der Fördergraben 15 entsteht dadurch, dass an der betreffenden Stelle die benachbarten Förderketten entlang einer kreisförmigen Bahn nach unten weggeführt werden. In diesen Fördergraben 15 ist das Rollenmodul 20 eingebaut. Das Rollenmodul 20 hat mehrere drehbare Förderrollen 30, welche das (nicht dargestellte) Fördergut im Bereich des Fördergrabens 15 abstützen.

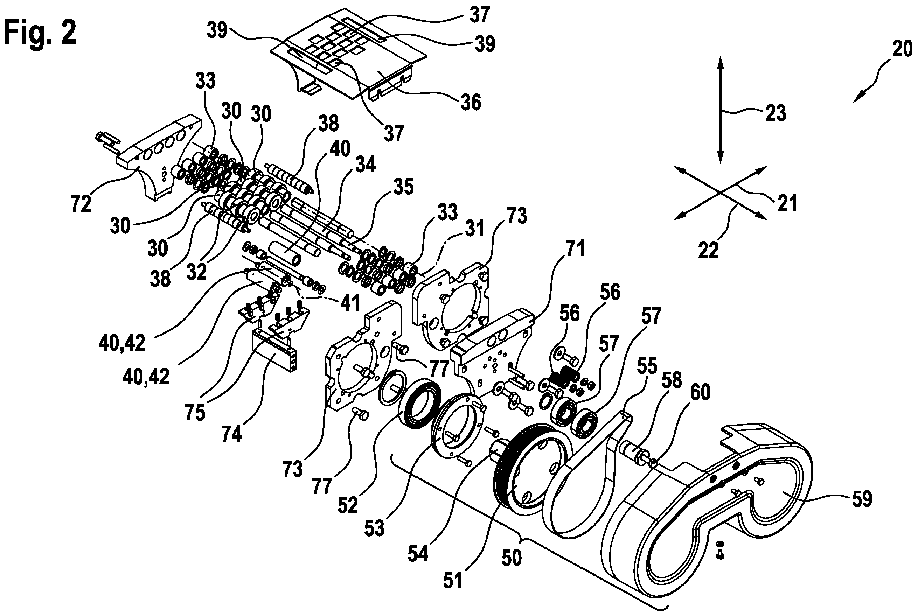

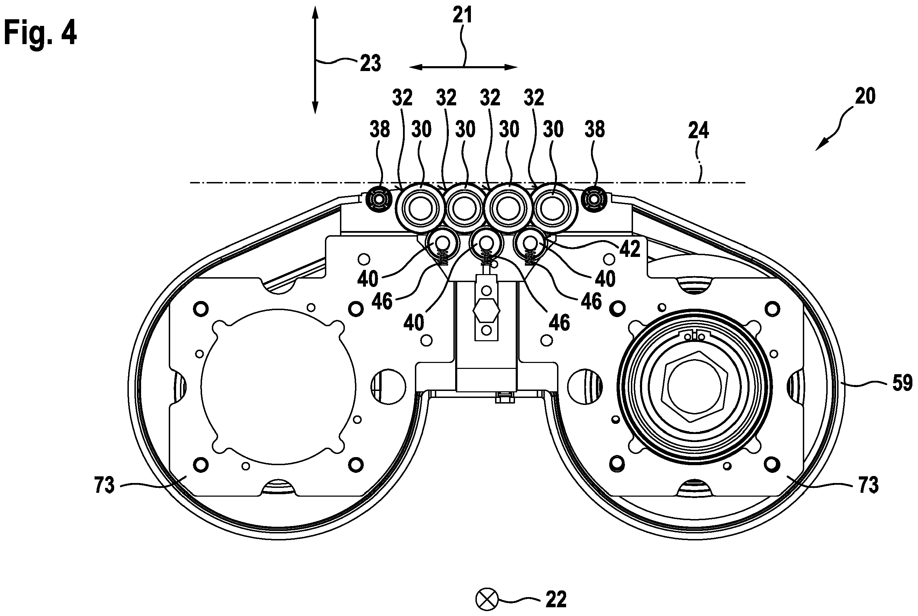

Fig. 2 zeigt eine Explosionsansicht des Rollenmoduls 20 nach Fig. 1. Das Rollenmodul 20 hat eine Förderrichtung 21, eine Querrichtung 22 und eine Hochrichtung 23. Die Förderrichtung 21 ist senkrecht zur Querrichtung 22 ausgerichtet. Die Hochrichtung 23 ist senkrecht zur Förder- und zur Querrichtung 21, 22 ausgerichtet. Die Förderebene (Nr. 24 in Fig. 4) ist parallel zur Förder- und zur Querrichtung 21; 22 ausgerichtet.

Das Fördermodul 20 hat einen Modulgrundkörper 70, der aus einer ersten und einer parallelen zweiten Seitenplatte 71; 72 zusammengesetzt ist, welche über einen Verbindungsträger 74 fest miteinander verbunden sind. Der Verbindungsträger 74 erstreckt sich mit einer konstanten, rechteckigen Querschnittsform in Querrichtung 22. Die Seitenplatten 71; 72 sind parallel zur Förder- und zur Hochrichtung 21; 23 ausgerichtet.

Insgesamt sind vier drehbare Förderrollen 30 vorgesehen, deren Drehachsen 31 parallel zur Querrichtung 22 ausgerichtet sind. Die Förderrollen 30 haben vorliegend jeweils drei bezüglich der zugeordneten Drehachse 31 kreiszylindrische Förderumfangsflächen 32, welche in Querrichtung 22 voneinander beabstandet sind. Es versteht sich, dass die Anzahl der Förderumfangsflächen 32 von der Breite des Rollenmoduls 20 abhängt. Der Durchmesser der Förderrollen 30 zwischen den Förderumfangsflächen 32 ist kleiner als derjenige der Förderumfangsflächen 32 selbst. Die Förderrollen 30 greifen kammartig ineinander, so dass der Abstand unmittelbar benachbarter Drehachsen 31 kleiner als der Durchmesser der Förderumfangsflächen 32 ausgebildet werden kann.

Die Förderumfangsflächen 32 werden von einem gesonderten Bauteil aus Kunststoff gebildet, welches fest mit einer zugeordneten Welle 34 aus Stahl verbunden ist. Der genannte Kunststoff ist vorzugsweise nachgiebig bzw. elastisch, wobei es sich höchst vorzugsweise um ein Elastomer handelt. Die Wellen 34 sind endseitig an zwei zugeordneten Drehlagern 33 drehbar gelagert. Die Drehlager 33 sind vorzugweise als Wälzlager ausgebildet. Die Drehlager 33 sind jeweils in einer der beiden Seitenplatten 71; 72 aufgenommen. Die Wellen 34 der beiden mittleren Förderrollen 30 sind mit einem kegelförmigen Antriebszapfen 35 versehen, der über die erste Seitenplatte 71 nach außen übersteht. Auf die beiden Antriebszapfen 35 ist jeweils ein Zahnriemenritzel 56 geklemmt, wobei nur eines der beiden Zahnriemenritzel 56 für den Antrieb genutzt wird (vgl. Fig. 1), so dass der Antrieb wahlweise von einem der beiden angrenzenden Kettenförderer(Nr. 10 in Fig. 1) her erfolgen kann. Hierbei ist anzumerken, dass das Zahnriemenrad 51 mit beiden Umlenkrädern (Nr. 11 in Fig. 1) in formschlüssige Drehmitnahmeverbindung bringbar ist, wobei es nur mit einem der beiden Umlenkräder in formschlüssiger Drehmitnahmeverbindung steht.

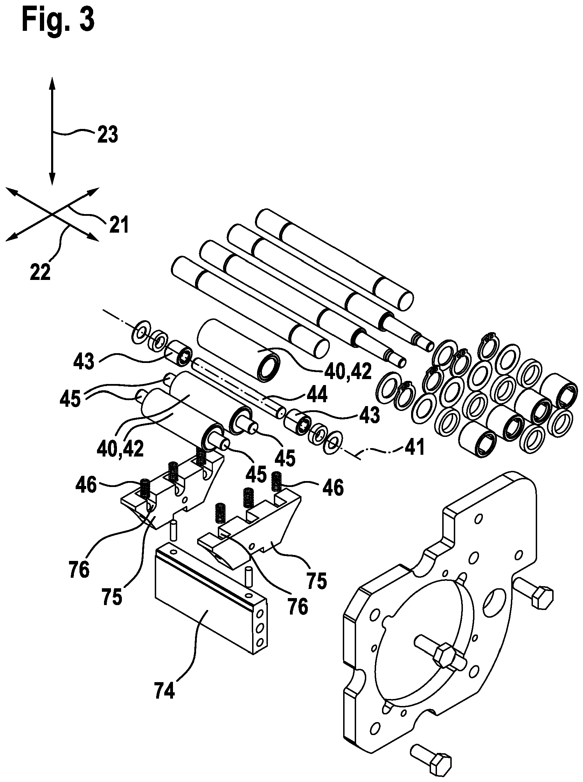

Unterhalb der Förderrollen 30 sind vorliegend insgesamt drei Mitnahmerollen 40 angeordnet, die mit Bezug auf Fig. 3 noch genauer beschrieben werden. Die Drehachsen 41 der drehbaren Mitnahmerollen 40 sind parallel zur Querrichtung 22 ausgerichtet.

In Förderrichtung 21 vor und hinter den Förderrollen 30 ist jeweils eine nicht angetriebene Einlaufrolle 38 angeordnet, deren Drehachse ebenfalls parallel zur Querrichtung 22 ausgerichtet ist. Von oben her sind die Förderrollen 30 und die Einlaufrollen 38 mit einer Rollenabdeckung 36 abgedeckt, welche als Blechbiegeteil ausgeführt ist. Die Förderumfangsflächen 32 der Förderrollen 30 ragen jeweils durch einen zugeordneten Durchbruch 37 durch die Rollenabdeckung 36 nach oben heraus. Für die Einlaufrollen 38 sind in entsprechender Weise die rechteckigen Durchbrüche 39 in der Rollenabdeckung 36 vorgesehen.

Die erste Seitenplatte 71 ist vorliegend mit zwei Befestigungsabschnitten 73 versehen, die als gesonderte Bauteile ausgebildet sind, wobei jedem Befestigungsabschnitt 73 einer der Kettenförderer aus Fig. 1 zugeordnet ist. Es ist aber ebenso denkbar, nur einen Befestigungsabschnitt 73 zu verwenden. Der Befestigungsabschnitt 73 kann auch einstückig mit der ersten Seitenplatte 71 ausgebildet sein. Der Befestigungsabschnitt 73 steht in Förderrichtung 21 über die zweite Seitenplatte 72 über, so dass der zugeordnete Kettenförderer am Befestigungsabschnitt 73 montiert werden kann, ohne dass die Montage durch die zweite Seitenplatte 72 behindert wird. Der Befestigungsabschnitt 73 wird vorliegend über vier Schraubenbolzen 77 mit dem zugeordneten Kettenförderer verschraubt. Darüber hinaus kann mit den beiden gesonderten Befestigungsabschnitten 73 der Abstand zu den beiden angrenzenden Kettenförderern gleich groß eingestellt werden. Weiter werden die beiden angrenzenden Kettenförderer über die Befestigungsabschnitte 73 zueinander ausgerichtet.

In dem Befestigungsabschnitt 73, welcher dem antreibenden Kettenförderer zugeordnet ist, ist ein gesondertes Drehlager 52 eingebaut, welches in Form eines Wälzlagers ausgebildet ist. Das Drehlager 52 wird von einem gesonderten Lagerhalter 53 an dem Befestigungsabschnitt 73 gehalten. Hierdurch kann die Dicke des Befestigungsabschnitts 73 kleiner als die Breite des Drehlagers 52 ausgeführt werden, um Material einzusparen. In dem Drehlager 52 ist wiederum ein Zahnriemenrad 51 drehbar aufgenommen, so dass dessen Drehachse mit der Drehachse (Nr. 13 in Fig. 1) des zugeordneten Umlenkrads des Kettenförderers zusammenfällt. Das Zahnriemenrad 51 ist fest mit einem Antriebszapfen 54 verbunden, der im Querschnitt betrachtet sechseckig ausgebildet ist. Der Antriebszapfen 54 ragt in einen sechseckigen Durchbruch des Umlenkrads des zugeordneten Kettenförderers hinein, so dass hierdurch eine formschlüssige Drehmitnahmeverbindung hergestellt wird. Es ist anzumerken, dass das Zahnriemenrad 51 einschließlich des Drehlagers 52 und dem Lagerhalter 53 wahlweise an einem der beiden Befestigungsabschnitte 73 montiert werden kann. Maßgeblich für die Auswahl ist allein, welcher Kettenförderer für den Antrieb des Rollenmoduls 20 verwendet werden soll. Weiter ist anzumerken, dass das Zahnriemenrad 51 von zwei gegenüberliegenden Seiten her in das zugeordnete Umlenkrad steckbar ist, wobei das Rollenmodul 20 in zwei Stellungen an den beiden Kettenförderern befestigbar ist, welche um 180° gedreht zueinander sind.

Das Zahnriemenrad 51 und eines der beiden Zahnriemenritzel 56 werden von einem Zahnriemen 55 umschlungen, so dass diese in Drehantriebsverbindung stehen. Der Zahnriemen 55 wird von einer drehbaren Spannrolle 57 unter die erforderliche Zugspannung gesetzt. Die Spannrolle 57 ist auf einem Exzenter 58 aufgenommen, so dass die Lage der Drehachse der Spannrolle 57 stufenlos verstellt werden kann. Der Exzenter 58 ist wiederum an dem zugeordneten Befestigungsabschnitt 73 befestigt, insbesondere mit der Klemmschraube 60.

Das gesamte Antriebsmittel 50, bestehend aus dem Zahnriemenrad 51, dem Zahnriemen 55 und den Zahnriemenritzeln 56 wird von einer Riemenabdeckung 59 umschlossen, so dass der Zahnriemen 55 vor Umgebungseinflüssen geschützt ist. Gleichzeitig wird die Verletzungsgefahr für Personen, die mit dem Rollenmodul 20 arbeiten, minimiert. Die Riemenabdeckung 59 ist so groß ausgebildet, dass das Zahnriemenrad 51 in einer der beiden möglichen Positionen montiert werden kann, ohne dass eine andere Riemenabdeckung 59 verwendet werden muss.

Fig. 3 zeigt einen vergrößerten Ausschnitt von Fig. 2 im Bereich der Mitnahmerollen 40. Die Mitnahmerollen 40 haben eine Umfangsfläche 42, die über ihre gesamte Länge kreiszylindrisch bezüglich der betreffenden Drehachse 41 ausgebildet ist. Die Mitnahmerollen 40 sind dabei in Querrichtung 22 etwas kürzer als die zugeordneten Förderrollen ausgebildet, wobei sie mittig oder außenmittig zu diesen angeordnet sind. Die Umfangsfläche 42 einer Mitnahmerolle 40 liegt reibschlüssig an den Förderumfangsflächen (Nr. 32 in Fig. 2) der beiden zugeordneten Förderrollen an. Damit überträgt sich die Drehbewegung der einen Förderrolle über die Mitnahmerolle 40 reibschlüssig auf die andere Förderrolle. Den insgesamt vier Förderrollen sind dabei vorliegend drei Mitnahmerollen 40 zugeordnet, so dass jedem Paar von Förderrollen eine Mitnahmerolle 40 zugeordnet ist.

Jede Mitnahmerolle 40 hat eine gesonderte Achse 44, die über ihre gesamte Länge kreiszylindrisch bezüglich der betreffenden Drehachse 41 ausgebildet ist. Zwischen die Mitnahmerollen 40 und die zugeordnete Achse 44 sind jeweils zwei Drehlager 43 eingebaut, die vorzugsweise als Wälzlager ausgebildet sind. Die beiden Drehlager 43 sind an den beiden gegenüberliegenden Enden der zugeordneten Mitnahmerolle 40 angeordnet, wobei sie in diese versenkt eingebaut sind.

Die Achse 44 steht mit zwei Lagerzapfen 45 über die zugeordnete Mitnahmerolle 40 über. Die Lagerzapfen 45 aller Mitnahmerollen 40 ragen in zugeordnete Führungsnuten 76 in zwei gesonderte Rollenhalter 75 ein. Die beiden Rollenhalter 75 sind oben auf dem Verbindungsträger 74 befestigt, welcher die erste Seitenplatte fest mit der zweiten Seitenplatte verbindet. Die Mitnahmerollen 40 sind dabei zwischen den beiden Rollenhaltern 75 angeordnet, wobei nur die Lagerzapfen 45 in die Führungsnuten 76 an den Rollenhaltern 75 hineinragen. Die Führungsnuten 76 verlaufen in Hochrichtung 23, wobei sie zur zugeordneten Mitnahmerolle 40 hin offen sind. Bezüglich der Hochrichtung 23 am unteren Ende der Führungsnut 76 ist jeweils eine Feder 46 in die Führungsnut 76 eingebaut, welche sich am Boden der Führungsnut 76 abstützt, wobei dort eine an die Feder 46 angepasste Zentrierbohrung angeordnet ist. Die Federn 46 sind vorliegend als Schraubenfedern ausgebildet. Die Lagerzapfen 45 liegen oben auf einer zugeordneten Feder 46 auf. Die Federn 46 sind unter Vorspannung eingebaut, so dass die Mitnahmerollen 40 jeweils von den beiden zugeordneten Federn 46 gegen die beiden zugeordneten Förderrollen gedrückt werden.

Fig. 4 zeigt einen Längsschnitt des Rollenmoduls 20 nach Fig. 1, wobei die Schnittebene senkrecht zur Querrichtung 22 durch die Mitte der Förderrollen 30 verläuft. Die Förderumfangsflächen 32 der Förderrollen 30 definieren eine Förderebene 24. Insbesondere liegen die genannten Förderumfangsflächen 32 tangential an der Förderebene 24 an. Das (nicht dargestellte) Fördergut läuft in Fig. 4 oben auf den Förderrollen 30 der Förderebene 24 entlang.

Auf der der Förderebene 24 gegenüberliegenden Seite der Förderrollen 30 sind die Mitnahmerollen 40 angeordnet. Deren Umfangsfläche 42 liegt jeweils an zwei Förderrollen 30 reibschlüssig an, so dass sich die Drehbewegung einer Förderrolle 30 über die Mitnahmerolle 40 auf die jeweils benachbarte Förderrolle 30 überträgt. Dabei werden die Mitnahmerollen 40 von den vorgespannten Federn 46 gegen die Förderrollen 30 gedrückt.

In Förderrichtung 21 vor und hinter den Förderrollen 30 ist jeweils eine der beiden drehbaren Einlaufrollen 38 angeordnet. Deren Umfangsfläche ist jeweils etwas unterhalb der Förderebene 24 angeordnet. Mit den Einlaufrollen 38 soll ein übermäßiges Verkippen des ein- und auslaufenden Förderguts vermieden werden. Dabei wirken die Einlaufrollen 38 mit Einlaufschrägen an der Rollenabdeckung (Nr. 36 in Fig. 2) zusammen.

Weiter ist auf die Riemenabdeckung 59 hinzuweisen. In Fig. 4 ist insbesondere zu erkennen, dass die beiden Befestigungsabschnitte 73 vollständig innerhalb der Riemenabdeckung 59 angeordnet sind, so dass die Riemenabdeckung 59 und die Befestigungsabschnitte 73 einen im Wesentlichen vollständig umschlossenen Raum bilden, in dem die beweglichen Teile des Rollenmoduls 20 geschützt angeordnet sind.

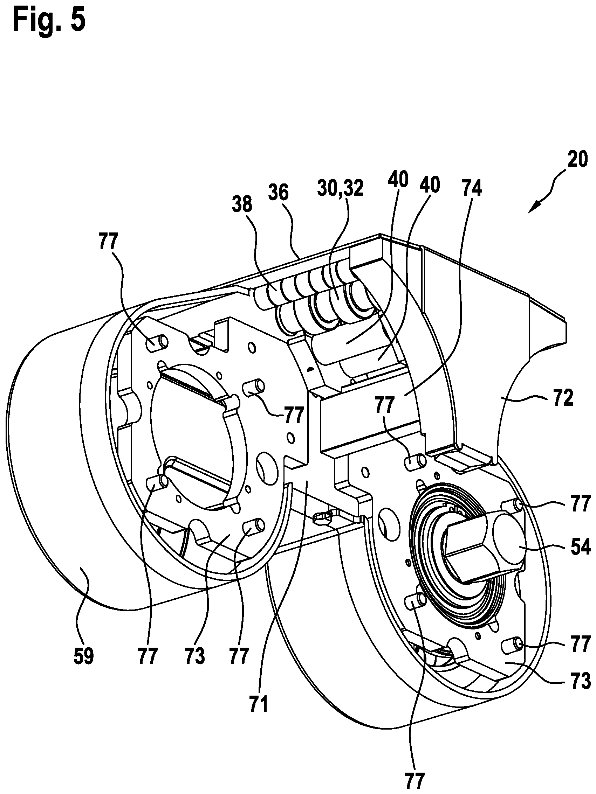

Fig. 5 zeigt eine perspektivische Ansicht des Rollenmoduls 20 nach Fig. 1 von schräg unten. Zu erkennen ist insbesondere, wie der Antriebszapfen 54 des Zahnriemenrades aus dem Rollenmodul 20, insbesondere aus dem zugeordneten Verbindungsabschnitt 73, herausragt. Somit kann das Rollenmodul 20 als Ganzes an die beiden zugeordneten Kettenförderer (Nr. 10 in Fig. 1) angebaut werden. Zur endgültigen Befestigung müssen nur die insgesamt acht Befestigungsschrauben 77 in die genannten Kettenförderer eingeschraubt werden. Hierfür muss die Riemenabdeckung von dem Rollenmodul 20 abgenommen werden.

Weiter ist in Fig. 5 zu erkennen, wie die Mitnahmerollen 40 von unten an den Förderrollen 30 anliegen.

### Bezugszeichenliste

- 10: Kettenförderer
- 11: Umlenkrad
- 12: Antriebsmotor
- 13: Drehachse des Umlenkrads
- 14: Abdeckplatte für Förderkette
- 15: Fördergraben

- 20: Rollenmodul
- 21: Förderrichtung
- 22: Querrichtung
- 23: Hochrichtung
- 24: Förderebene

- 30: Förderrolle
- 31: Drehachse der Förderrolle
- 32: Förderumfangsfläche
- 33: Drehlager der Förderrolle
- 34: Welle der Förderrolle
- 35: Antriebszapfen der Förderrolle
- 36: Rollenabdeckung
- 37: Durchbruch für Förderumfangsfläche
- 38: Einlaufrolle
- 39: Durchbruch für Einlaufrolle

- 40: Mitnahmerolle
- 41: Drehachse der Mitnahmerolle
- 42: Umfangsfläche der Mitnahmerolle
- 43: Drehlager der Mitnahmerolle
- 44: Achse der Mitnahmerolle
- 45: Lagerzapfen
- 46: Feder

- 50: Antriebsmittel
- 51: Zahnriemenrad
- 52: Drehlager des Zahnriemenrads
- 53: Lagerhalter
- 54: Antriebszapfen
- 55: Zahnriemen
- 56: Zahnriemenritzel
- 57: Spannrolle
- 58: Exzenter
- 59: Riemenabdeckung
- 60: Klemmschraube

- 70: Modulgrundkörper
- 71: erste Seitenplatte
- 72: zweite Seitenplatte
- 73: Befestigungsabschnitt
- 74: Verbindungsträger
- 75: Rollenhalter
- 76: Führungsnut
- 77: Befestigungsschraube

## Patentansprüche

1. Fördervorrichtung mit einem Rollenmodul (20),welches eine Förderrichtung (21) und eine Querrichtung (22) aufweist, wobei die Querrichtung (22) senkrecht zur Förderrichtung (21) ausgerichtet ist, wobei wenigstens zwei drehbare Förderrollen (30) vorgesehen sind, die jeweils wenigstens eine Förderumfangsfläche (32) aufweisen, wobei die Drehachsen (31) der Förderrollen (30) parallel zur Querrichtung (22) angeordnet sind, wobei die Förderrollen (30) in Förderrichtung (21) nacheinander angeordnet sind, wobei die Förderumfangsflächen (32) der Förderrollen (30) eine Förderebene (24) definieren, wobei wenigstens eine drehbare Mitnahmerolle (40) vorgesehen ist, deren Drehachse (41) parallel zur Querrichtung (22) angeordnet ist, wobei die wenigstens eine Mitnahmerolle (40) auf der von der Förderebene (24) abgewandten Seite der wenigstens zwei Förderrollen (30) angeordnet ist, wobei eine Umfangsfläche (42) der wenigstens einen Mitnahmerolle (40) in Drehmitnahmeeingriff mit den Förderumfangsflächen (32) zweier zugeordneter Förderrollen (30) steht, wobei mindestens zwei Mitnahmerollen (40) vorgesehen sind, **dadurch gekennzeichnet, dass** die Fördervorrichtung zwei Kettenförderer (10) umfasst, welche jeweils ein drehbares Umlenkrad (11) aufweisen, wobei ein einziges Zahnriemenrad (51) vorgesehen ist, welches mit beiden genannten Umlenkrädern (11) in formschlüssige Drehmitnahmeverbindung bringbar ist, wobei es mit einem der beiden genannten Umlenkrädern (11) in formschlüssiger Drehmitnahmeverbindung steht, wobei ein Zahnriemen (55) vorgesehen ist, welcher das Zahnriemenrad (51) und eine Mitnahmerolle (40) umschlingt, wobei zwei Mitnahmerollen (40) jeweils mit einem Zahnriemenritzel (56) versehen sind, wobei eines der beiden genannten Zahnriemenritzel (56) von dem Zahnriemen (55) umschlungen ist.

2. Fördervorrichtung nach Anspruch 1,
wobei die Anzahl der Mitnahmerollen (40) um Eins kleiner als die Anzahl der Förderrollen (30) ist, wobei alle Mitnahmerollen (40) mit unterschiedlichen Paaren von Förderrollen (30) in Drehmitnahmeeingriff stehen.

3. Fördervorrichtung nach einem der vorstehenden Ansprüche,
wobei der Drehmitnahmeeingriff zwischen der wenigstens einen Mitnahmerolle (40) und den zwei zugeordneten Förderrollen (30) reibschlüssig erfolgt.

4. Fördervorrichtung nach einem der vorstehenden Ansprüche,
wobei wenigstens eine Förderrolle (30) und/oder wenigstens eine Mitnahmerolle (40) über ein zugeordnetes Antriebsmittel (50) in Drehantriebsverbindung mit dem Kettenförderer (10) bringbar sind.

5. Fördervorrichtung nach Anspruch 4,
wobei die Antriebsmittel (50) so ausgebildet sind, dass sie wahlweise mit einem von zwei angrenzenden Kettenförderern (10) in Drehantriebsverbindung bringbar sind.

6. Fördervorrichtung nach einem der vorstehenden Ansprüche,
wobei die wenigstens eine Mitnahmerolle (40) in Querrichtung (22) kürzer als die beiden zugeordneten Förderrollen (30) ist.

7. Fördervorrichtung nach einem der vorstehenden Ansprüche,
wobei der wenigstens einen Mitnahmerolle (40) wenigstens eine gesonderte, vorgespannte Feder (46) zugeordnet ist, welche die genannte Mitnahmerolle (40) gegen die beiden zugeordneten Förderrollen (30) drückt.

8. Fördervorrichtung nach Anspruch 7,
wobei eine Hochrichtung (23) senkrecht zur Förderrichtung (21) und zur Querrichtung (22) angeordnet ist, wobei die wenigstens eine Mitnahmerolle (40) an ihren beiden gegenüberliegenden Enden jeweils einen Lagerzapfen (45) aufweist, der konzentrisch zu ihrer Drehachse (41) angeordnet ist, wobei die Lagerzapfen (45) in Hochrichtung (23) beweglich gelagert sind, wobei jedem Lagerzapfen (45) eine gesonderte vorgespannte Feder (46) zugeordnet ist, welche den Lagerzapfen (45) in Hochrichtung (23) belastet.

9. Fördervorrichtung nach einem der vorstehenden Ansprüche,
wobei jede Förderrolle (30) mehrere gesonderte Förderumfangsflächen (32) aufweist, welche in Querrichtung (22) beabstandet sind, wobei zwei unmittelbar benachbarte Förderrollen (30) kammartig ineinander greifen.

10. Fördervorrichtung nach einem der vorstehenden Ansprüche,
wobei eine erste und eine zweite Seitenplatte (71; 72) vorgesehen ist, an denen die wenigstens zwei Förderrollen (30) drehbar gelagert sind, wobei der ersten Seitenplatte (71) ein Befestigungsabschnitt (73) zugeordnet ist, welcher in Förderrichtung (21) über die zweite Seitenplatte (72) übersteht, wobei der Befestigungsabschnitt (73) an dem Kettenförderer (10) befestigbar ist.

11. Fördervorrichtung nach einem der vorstehenden Ansprüche,
wobei die Förderumfangsflächen (32) der wenigstens zwei Förderrollen (30) kreiszylindrisch bezüglich der zugeordneten Drehachse (31) ausgebildet sind, wobei die Umfangsfläche (42) der wenigstens einen Mitnahmerolle (40) kreiszylindrisch bezüglich der zugeordneten Drehachse (41) ausgebildet ist.

12. Fördervorrichtung nach einem der vorstehenden Ansprüche,
wobei das Zahnriemenrad (51) jeweils von zwei gegenüberliegenden Seiten her mit den beiden genannten Umlenkrädern (11) in formschlüssige Drehmitnahmeverbindung bringbar ist.

13. Fördervorrichtung nach Anspruch 12,
wobei das Rollenmodul (20) in zwei Stellungen an den beiden Kettenförderern (10) montierbar ist, welche um 180° gedreht zueinander angeordnet sind.

## Claims

1. Conveying device having a roller module (20) which has a conveying direction (21) and a transverse direction (22), wherein the transverse direction (22) is aligned so as to be perpendicular to the conveying direction (21), wherein at least two rotatable conveyor rollers (30) which have in each case at least one conveying circumferential face (32) are provided, wherein the rotation axes (31) of the conveyor rollers (30) are disposed so as to be parallel with the transverse direction (22), wherein the conveyor rollers (30) in the conveying direction (21) are sequentially disposed, wherein the conveying circumferential faces (32) of the conveyor rollers (30) define a conveying plane (24), wherein at least one rotatable entrainment roller (40) of which the rotation axis (41) is disposed so as to be parallel with the transverse direction (22) is provided, wherein the at least one entrainment roller (40) is disposed on that side of the at least two conveyor rollers (30) that faces away from the conveying plane (24), wherein a circumferential face (42) of the at least one entrainment roller (40) is in a rotationally entraining engagement with the conveying circumferential faces (32) of two assigned conveyor rollers (30), wherein at least two entrainment rollers (40) are provided, **characterized in that** the conveying device comprises two chain conveyors (10) which have in each case one rotatable deflection wheel (11), wherein a single timing belt wheel (51) which is capable of being brought into a form-fitting rotational entraining engagement with the two mentioned deflection wheels (11) is provided, wherein said single timing belt wheel (51) is in a form-fitting rotational entraining engagement with one of the two mentioned deflection wheels (11), wherein a timing belt (55) which wraps the timing belt wheel (51) and an entrainment roller (40) is provided, wherein two entrainment rollers (40) are in each case provided with one timing belt sprocket (56), wherein one of the two mentioned timing belt sprockets (56) is wrapped by the timing belt (55).

2. Conveying device according to Claim 1,
wherein the number of entrainment rollers (40) is one less than the number of the conveyor rollers (30), wherein all entrainment rollers (40) are in a rotationally entraining engagement with different pairs of conveyor rollers (30).

3. Conveying device according to one of the preceding claims,
wherein the rotationally entraining engagement is performed in a frictionally engaging manner between the at least one entrainment roller (40) and the two assigned conveyor rollers (30).

4. Conveying device according to one of the preceding claims,
wherein at least one conveyor roller (30) and/or at least one entrainment roller (40) by way of an assigned driving means (50) are/is capable of being brought into a rotationally entraining engagement with the chain conveyor (10).

5. Conveying device according to Claim 4,
wherein the driving means (50) are configured such that said driving means (50) are capable of being selectively brought into a rotationally entraining engagement with one of two adjacent chain conveyors (10).

6. Conveying device according to one of the preceding claims,
wherein the at least one entrainment roller (40) in the transverse direction (22) is shorter than the two assigned conveyor rollers (30).

7. Conveying device according to one of the preceding claims,
wherein the at least one entrainment roller (40) is assigned at least one dedicated biased spring (46) which urges the mentioned entrainment roller (40) against the two assigned conveyor rollers (30).

8. Conveying device according to Claim 7,
wherein a height direction (23) is disposed so as to be perpendicular to the conveying direction (21) and to the transverse direction (22), wherein the at least one entrainment roller (40) at the two opposite ends thereof has in each case one bearing journal (45) which is disposed so as to be concentric with the rotation axis (41) of said entrainment roller (40), wherein the bearing journals (45) are mounted so as to be movable in the height direction (23), wherein each bearing journal (45) is assigned one dedicated biased spring (46) which stresses the bearing journal (45) in the height direction (23).

9. Conveying device according to one of the preceding claims,
wherein each conveyor roller (30) has a plurality of dedicated conveying circumferential faces (32) which are spaced apart in the transverse direction (22), wherein two directly neighbouring conveyor rollers (30) mesh in a comb-like manner.

10. Conveying device according to one of the preceding claims,
wherein one first and one second side plate (71; 72) on which the at least two conveyor rollers (30) are rotatably mounted are provided, wherein the first side plate (71) is assigned a fastening portion (73) which in the conveying direction (21) projects beyond the second side plate (72), wherein the fastening portion (73) is fastenable to the chain conveyor (10).

11. Conveying device according to one of the preceding claims,
wherein the conveying circumferential faces (32) of the at least two conveyor rollers (30) are configured so as to be circular-cylindrical in relation to the assigned rotation axis (31), wherein the circumferential face (42) of the at least one entrainment roller (40) is configured so as to be circular-cylindrical in relation to the assigned rotation axis (41).

12. Conveying device according to one of the preceding claims,
wherein the timing belt wheel (51) is capable of being brought into a form-fitting rotationally entraining engagement with the two mentioned deflection wheels (11) from in each case two opposite sides.

13. Conveying device according Claim 12,
wherein the roller module (20) is fittable to the two chain conveyors (10) in two positions which are disposed so as to be mutually rotated by 180°.

## Revendications

1. Dispositif de transport comprenant un module à rouleaux (20) qui présente une direction de transport (21) et une direction transversale (22), la direction transversale (22) étant orientée perpendiculairement à la direction de transport (21), au moins deux rouleaux de transport rotatifs (30) étant prévus, lesquels présentent chacun au moins une surface périphérique de transport (32), les axes de rotation (31) des rouleaux de transport (30) étant disposés parallèlement à la direction transversale (22), les rouleaux de transport (30) étant disposés l'un derrière l'autre dans la direction de transport (21), les surfaces périphériques de transport (32) des rouleaux de transport (30) définissant un plan de transport (24), au moins un rouleau d'entraînement rotatif (40) étant prévu, dont l'axe de rotation (41) est disposé parallèlement à la direction transversale (22), l'au moins un rouleau d'entraînement (40) étant disposé du côté des au moins deux rouleaux de transport (30) opposé au plan de transport (24), une surface périphérique (42) de l'au moins un rouleau d'entraînement (40) étant en prise d'entraînement en rotation avec les surfaces périphériques de transport (32) de deux rouleaux de transport associés (30),
au moins deux rouleaux d'entraînement (40) étant prévus,
**caractérisé en ce que** le dispositif de transport comprend deux transporteurs à chaîne (10) qui présentent chacun une poulie de renvoi rotative (11), une roue de courroie dentée unique (51) étant prévue, laquelle peut être amenée en liaison d'entraînement en rotation par engagement par correspondance de formes avec lesdites deux poulies de renvoi (11), la roue de courroie dentée unique étant en liaison d'entraînement en rotation par engagement par correspondance de formes avec l'une desdites deux poulies de renvoi (11), une courroie dentée (55) étant prévue, laquelle enveloppe la roue de courroie dentée (51) et un rouleau d'entraînement (40), deux rouleaux d'entraînement (40) étant pourvus chacun d'un pignon de courroie dentée (56), l'un desdits deux pignons de courroie dentée (56) étant enveloppé par la courroie dentée (55).

2. Dispositif de transport selon la revendication 1,
dans lequel le nombre de rouleaux d'entraînement (40) est inférieur d'une unité au nombre de rouleaux de transport (30), tous les rouleaux d'entraînement (40) étant en engagement d'entraînement en rotation avec des paires différentes de rouleaux de transport (30).

3. Dispositif de transport selon l'une quelconque des revendications précédentes,
dans lequel l'engagement d'entraînement en rotation entre l'au moins un rouleau d'entraînement (40) et les deux rouleaux de transport associés (30) s'effectue par engagement par friction.

4. Dispositif de transport selon l'une quelconque des revendications précédentes,
dans lequel au moins un rouleau de transport (30) et/ou au moins un rouleau d'entraînement (40) peuvent être amenés en liaison d'entraînement en rotation avec le transporteur à chaîne (10) par le biais d'un moyen d'entraînement associé (50).

5. Dispositif de transport selon la revendication 4,
dans lequel les moyens d'entraînement (50) sont réalisés de manière à pouvoir être amenés en liaison d'entraînement en rotation de manière sélective avec l'un de deux transporteurs à chaîne adjacents (10).

6. Dispositif de transport selon l'une quelconque des revendications précédentes,
dans lequel l'au moins un rouleau d'entraînement (40) est plus court dans la direction transversale (22) que les deux rouleaux de transport associés (30).

7. Dispositif de transport selon l'une quelconque des revendications précédentes,
dans lequel au moins un ressort précontraint séparé (46) est associé à l'au moins un rouleau d'entraînement (40), lequel presse ledit rouleau d'entraînement (40) contre les deux rouleaux de transport associés (30).

8. Dispositif de transport selon la revendication 7,
dans lequel une direction verticale (23) est orientée perpendiculairement à la direction de transport (21) et à la direction transversale (22), l'au moins un rouleau d'entraînement (40) présentant au niveau de ses deux extrémités opposées à chaque fois un tourillon de palier (45) qui est disposé concentriquement par rapport à son axe de rotation (41), le tourillon de palier (45) étant supporté de manière déplaçable dans la direction verticale (23), un ressort précontraint séparé (46) étant associé à chaque tourillon de palier (45), lequel sollicite le tourillon de palier (45) dans la direction verticale (23).

9. Dispositif de transport selon l'une quelconque des revendications précédentes,
dans lequel chaque rouleau de transport (30) présente plusieurs surfaces périphériques de transport séparées (32) qui sont espacées dans la direction transversale (22), deux rouleaux de transport immédiatement adjacents (30) s'engageant l'un dans l'autre en forme de peigne.

10. Dispositif de transport selon l'une quelconque des revendications précédentes,
dans lequel une première et une deuxième plaque latérale (71 ; 72) sont prévues, au niveau desquelles sont supportés à rotation les au moins deux rouleaux de transport (30), une portion de fixation (73) étant associée à la première plaque latérale (71), laquelle dépasse dans la direction de transport (21) au-delà de la deuxième plaque latérale (72), la portion de fixation (73) pouvant être fixée au transporteur à chaîne (10).

11. Dispositif de transport selon l'une quelconque des revendications précédentes,
dans lequel les surfaces périphériques de transport (32) des au moins deux rouleaux de transport (30) sont réalisées de manière cylindrique circulaire par rapport à l'axe de rotation associé (31), la surface périphérique (42) de l'au moins un rouleau d'entraînement (40) étant réalisée de manière cylindrique circulaire par rapport à l'axe de rotation associé (41).

12. Dispositif de transport selon l'une quelconque des revendications précédentes,
dans lequel la roue de courroie dentée (51) peut être amenée en liaison d'entraînement en rotation par engagement par correspondance de formes à chaque fois depuis deux côtés opposés avec lesdites deux poulies de renvoi (11).

13. Dispositif de transport selon la revendication 12,
dans lequel le module à rouleaux (20) peut être monté dans deux positions sur les deux transporteurs à chaîne (10) qui sont disposés de manière tournée de 180° l'un par rapport à l'autre.
